# EUROPEAN PATENT SPECIFICATION

(11) **EP 3 920 839 B1**
(45) Date of publication and mention of the grant of the patent: **06.03.2024**
(21) Application number: 20701742.7
(22) Date of filing: 23.01.2020
(51) Int. Cl.: A61C 17/22, A46B 15/00

(54) **TOOTHBRUSH MOTION ANALYSIS**
ZAHNBÜRSTENBEWEGUNGSANALYSE
ANALYSE DE MOUVEMENT DE BROSSE À DENTS

(30) Priority: 05.02.2019 EP 19155535
(43) Date of publication of application: 15.12.2021
(73) Proprietor: UNILEVER GLOBAL IP LIMITED, Wirral Merseyside CH62 4ZD (GB); Unilever IP Holdings B.V., 3013 AL Rotterdam (NL)
(72) Inventor: SAVILL, Derek Guy, Mouldsworth Cheshire CH3 8AX (GB); TRELOAR, Robert Lindsay, Wirral Merseyside CH63 3JW (GB); ZILLMER, Ruediger, Wirral Merseyside CH63 3JW (GB)
(74) Representative: Tansley, Sally Elizabeth
(86) International application number: PCT/EP2020/051605
(87) International publication number: WO 2020/160921

(56) References cited:
- WO-A1-2009/141489
- WO-A1-2012/020165
- WO-A1-2017/157411
- WO-A1-2018/037318
- WO-A1-2019/072917
- CN-A- 107 832 719

## Description

This disclosure relates to a computer program and apparatus for monitoring and analysing toothbrush motion.

The prior art teaches a number of systems for providing a user with feedback on their toothbrushing activity, including providing the user with an indication as to whether particular regions of the mouth have been adequately or sufficiently brushed. Various systems have been proposed for monitoring toothbrushing activity including those using sensors such as accelerometers located on or in the toothbrush, as well as those that use a camera and image tracking systems to observe the brushing position and brushing angle adopted by the user.

The user can then be provided with feedback indicative of whether they are brushing their teeth optimally. The feedback may be of various types, including whether the duration of toothbrushing in each particular location of the mouth is sufficient, whether all teeth surfaces have been properly addressed during a tooth brushing activity, and whether an optimal brushing path or brushing pattern is taken by the brush around the mouth. WO 2018/037318 describes an oral hygiene system for compliance monitoring which tracks motion and orientation of an oral hygiene device.

Some toothbrushing monitoring systems enabling coaching or teaching of the user over periods of time by tracking the use of the toothbrush and provide feedback to the user to help improve, over time, the user's technique, brushing efficacy and brushing duration.

WO2019072917 A1 (Philips) (a document according to Art. 54(3) EPC) discloses a method for identifying a characteristic of a user of a personal care device comprising a sensor, a controller, and a database, comprising the steps of: training (320) the device with training data, comprising the steps of: (i) obtaining sensor data for at least one personal care session for each of at least two different users; (ii) extracting, via an extraction module, a plurality of features from each of the personal care sessions; and (iii) training, using the extracted features, a classifier to identify a characteristic of each of the at least two different users of the device; obtaining sensor data for at least part of a new personal care session; extracting a plurality of features from the sensor data for the new personal care session; and identifying, using the trained classifier, a characteristic of the user of the device.

WO2018037318 A1 (Kolibree) discloses oral hygiene monitoring system is disclosed to track motion and orientation of an oral hygiene device. The control system may process data output from a motion sensor to determine position and orientation of an oral hygiene device with respect to a user's mouth. In some examples, the system may use machine learning techniques to identify position and orientation, brush stroke type, and other specific actions.

CN 107832719 A (Beijing Langmeng) discloses teeth brushing analysis method and device, and a teeth brushing system, and relates to the field of intelligent teeth brushing technology. The method is executed by a user terminal, and the user terminal is in communication connection with an intelligent toothbrush. The method comprises the steps of: when it is monitored that a user starts an intelligent toothbrush, identifying user's identity information; determining a teeth brushing standard corresponding to the identity information; extracting user's teeth brushing feature information by employing the intelligent toothbrush, wherein teeth brushing feature information comprises one or more than one of teeth brushing efficiency, teeth brushing effective duration corresponding to each teeth brushing area, motion frequency corresponding to each teeth brushing area, a teeth brushing motion track, a teeth brushing angle track and a teeth brushing acceleration track; and generating a user's teeth brushing analysis report according to the user's teeth brushing feature information and the teeth brushing standard corresponding to the identity information. The teeth brushing analysis method and device, and teeth brushing system can allow users to clearly understand teeth brushing behaviours of the users themselves, are helpful for the users to standardize the teeth brushing behaviours and can improve the teeth brushing effect.

One efficient and accurate method of tracking toothbrush motion is by way of motion sensors, such as accelerometers, in the toothbrush. These can accurately detect motion of the toothbrush, in six degrees of freedom, i.e. translational movement of the toothbrush along all three orthogonal axes in space (x, y, z) as well as rotational motion of the toothbrush about each of its three orthogonal axes.

When tracking motion and use of a toothbrush by a particular user, for sustained assistive feedback to that user, it is important that the user is identified on each occasion the toothbrush is used. This can be done by the complete toothbrush and motion tracking system being personalised to the individual user, i.e. used solely by one user.

However, in many households a toothbrush motor unit or base unit, in which such motion sensors may be disposed, may be shared by multiple members of the household. Each member of the household may typically have their own toothbrushing head attachable to the toothbrush motor unit or base unit. Even where a toothbrush unit is not shared, the motion tracking and user feedback functionality may be provided in part by a data processing device which is remote from the toothbrush, and which receives signals therefrom. This data processing device may be shared by multiple members of the household or even by a wider number of users as a cloud-based server function, and thus the user of the toothbrush from which the data processing unit receives data must be known to the data processing unit.

To provide properly individualised toothbrushing monitoring and feedback it is therefore desirable that a suitable program of identifying each particular user of a toothbrush is provided, so that toothbrushing monitoring and feedback may be correctly attributed to each user. One non-claimed method for identifying individual users is to require a user 'log in' function, e.g. a manual user identification function, but this may be seen as inconvenient or time-consuming by many users for an everyday toothbrushing routine.

It is desirable to make the process for identifying a particular user of a toothbrush motion tracking system as easy as possible to the user, and / or to reduce the risk of error in incorrectly ascribing toothbrushing data to a different user.

According to one aspect, the present invention provides a computer program as defined in claim 1 and a toothbrush motion tracking system comprising a data processor as defined in claim 8.

Determining a motion component distribution of the filtered motion data comprises using principal component analysis. The computer program further includes, based on the comparing, selecting a one of said plurality of users as the indicated user and storing data or providing feedback based on the selected user. The predetermined frequency range comprises frequencies above 1 Hz. The predetermined frequency range may comprise a passband of between 1 and 7 Hz or between 2 Hz and 6 Hz. The at least two axes may include a longitudinal axis of the toothbrush. The program may further include using motion data relative to at least three axes of the toothbrush.

Determining a motion component distribution comprises performing said principal component analysis to project the motion data onto a set of principal axes so as to maximise variance across the principal axes, and using features of the motion components in the reference frame of the principal axes to discriminate the user-specific motion from other ones of said users. Determining a motion component distribution may comprise performing said principal component analysis to project the motion data onto a set of principal axes so as to maximise variance across the principal axes, and using a mapping or rotation matrix from the axes of the toothbrush motion data to the principal axes to discriminate the user-specific motion from other ones of said users. The features of the motion components used may comprise a measure of motion variances along the principal axes. The determining of a motion component distribution may comprise performing principal component analysis to project the motion data onto selected principal axes and discriminating the user-specific motion from other ones of said users in feature space. The motion component distribution may comprise a direction of the principal motion components of the filtered motion data. The motion component distribution may comprise a measure of variance on principal motion components of the filtered motion data. The program may further include obtaining training data indicative of toothbrush motion for each of said plurality of users and using said training data to derive reference motion component distributions for each of said plurality of users. The toothbrush motion data may be obtained from an accelerometer mounted in or on a toothbrush. The toothbrush motion data may be obtained from video images of the toothbrush motion during brushing. Obtaining data indicative of toothbrush motion may comprise obtaining video images of the toothbrush motion during brushing and analysing an image of the user and/or toothbrush to deduce motion of the toothbrush. The Program may further include allocating obtained data to a user-specific dataset according to the selected one of the plurality of users. The program may further comprise providing the selected user with toothbrushing feedback based on the selected one of the plurality of users. The program may further include sending toothbrushing data, e.g. the data indicative of toothbrush motion, to a smartphone of the selected user. The program may be carried out during an early portion of a toothbrushing session of a user, further comprising using the obtained data indicative of toothbrush motion relative to at least two axes of the toothbrush as part of a complete toothbrushing session data set. The program may further include the step of selecting a one of the plurality of users based on a k-nearest neighbours algorithm, linear discriminant analysis or a Mahalanobis classifier.

According to another aspect, the invention provides a toothbrush motion tracking system comprising a data processor configured to perform the steps of the above program.

The toothbrush motion tracking system may further comprise a receiver configured to wirelessly receive the data indicative of toothbrush motion from a motion sensor. The toothbrush motion tracking system may further include a motion sensor module configured for removable attachment to a toothbrush. The motion sensor module may comprise a motion sensor configured to sense movement of a toothbrush to which it is attached and a wireless transmitter configured for transmission of the sensed motion data to a remote device. The data processor of the toothbrush motion tracking system may be disposed in or on a toothbrush. The data processor of the toothbrush motion tracking system may be at least partially disposed within a mobile telecommunication device.

Embodiments of the present invention will now be described by way of example and with reference to the accompanying drawings in which:
Figure 1 shows a schematic view of different types of toothbrushes and a toothbrush motion tracking system;
Figure 2 shows a flow chart of a process for identifying a particular user from received toothbrush motion data;
Figure 3 shows a toothbrush incorporating sensing functions and the main axes of the toothbrush;
Figure 4 shows a graph showing the discrimination between five users' brushing characteristics in feature space with the variation associated with the leading two motion components;
Figure 5 shows a graph illustrating the dependence of user identification accuracy on the length of toothbrushing session segment used.

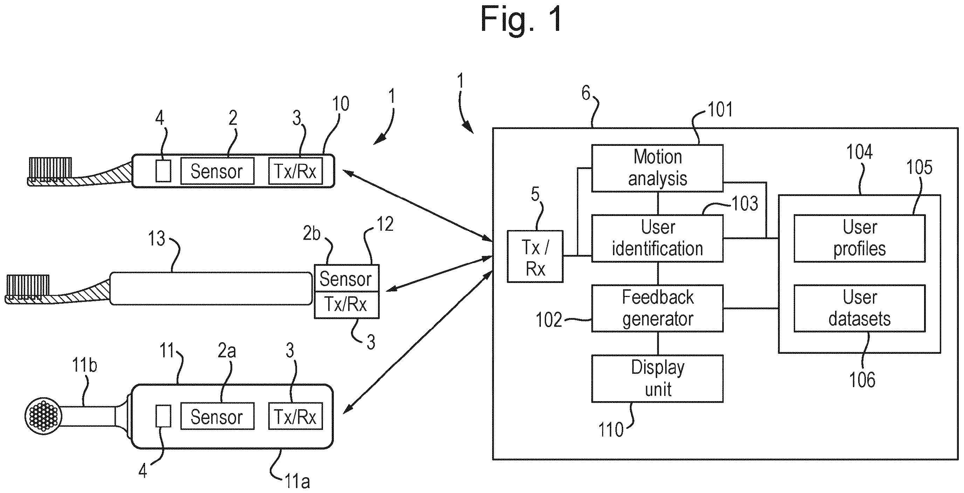

With reference to figure 1, the systems described herein enable the identification of a particular user, from among a group of possible users, of a toothbrush motion tracking system. This is particularly useful where at least parts of the toothbrush motion tracking system are shared among multiple users. By way of example, the toothbrush motion tracking system 1 may incorporate motion and / or other sensors 2 within a toothbrush 10. Alternatively, the motion and/or other sensors 2a may be incorporated within a part of a toothbrush 11 such as a toothbrush motor unit 11a that facilitates the use of individualised brush heads 11b. In another alternative arrangement, the motion and / or other sensors 2b may be incorporated into a toothbrush attachment 12 ('dongle') for attachment to a toothbrush 13. The dongle 12 may be configured for permanent or temporary attachment to a generic toothbrush 13 to provide the motion sensing capability. The expression 'dongle' is intended to encompass any permanent or temporary attachment to a toothbrush which imparts some additional functionality to the toothbrush such as motion sensing and/or data capture and/or data delivery / transmission to another device separate from the toothbrush. In particular, the expression 'dongle' encompasses a motion sensor module configured to sense movement of a toothbrush to which it is attached, and a wireless transmitter configured for transmission of the sensed motion data to a remote device.

The expression 'permanent attachment may encompass a dongle 12 which is attached once to a toothbrush 13 by a user to modify the toothbrush for its expected life, or a dongle which is added to a generic toothbrush by a manufacturer or vendor of the toothbrush to improve its functionality. The expression 'temporary attachment' may encompass a dongle 12 which is attached to and removed from a toothbrush many times during the life of the toothbrush, e.g. each time a user uses the toothbrush, such that the dongle could be used by multiple members of the same household each having their own generic toothbrush. This has an advantage of reducing costs of the motion sensing functionality since it need not be built into a more disposable commodity such as the toothbrush 13, and also allows the motion sensing functionality to be shared between multiple users.

The toothbrush motion tracking system may also provide a communication system for transferring data between the toothbrush (or toothbrush / dongle combination) and one or more data processing devices separate from (e.g. remote from) the toothbrush. The communication system may comprise one or more wireless communication channels. In the example of figure 1, each toothbrush 10, 11 or dongle 12 may be provided with a transmitter 3 for transmission of data to a remote receiver 5 at a data processing system 6. Depending on the functionality required, the communication may be unidirectional, from the toothbrush 10 or 11 or dongle 12 to the receiver 5. However, in other implementations, the transmitter 3 and receiver 5 may both be configured as transceivers for bidirectional communication.

The toothbrush motion tracking system 1 may also provide a data processing system 6 which can be configured to analyse motion of the toothbrush 10, 11, 12, 13 and generate feedback information for the user regarding use of the toothbrush. In the example of figure 1, the data processing system may include a motion analysis module 101 configured to receive motion data from the toothbrush sensors 2 and analyse the toothbrush motion.

The toothbrush motion tracking system 1 may also provide a feedback device which imparts the feedback generated by the data processing system to the user. A suitable feedback device may include one or more of a display for giving visual feedback, an audio system for giving audio feedback, a transducer for providing haptic feedback. In the example, of figure 1, the feedback device may comprise a feedback generator module 102 configured to receive motion analysis data from the motion analysis module 101 and determine suitable user feedback to assist the user in improving toothbrushing technique, which can be displayed on a display module 110.

At least some of the hardware / software providing some or all of these component parts of a toothbrush motion tracking system 1 may be shared among multiple users and the invention seeks to ensure that toothbrush motion data captured in respect of a specific user is correctly ascribed to that user regardless of the use of shared components of the toothbrush motion tracking system.

In the example of figure 1, the data processing system 6 may include a user identification module 103 and a database 104 coupled thereto which may include user profiles 105 and user datasets 106 to be described in greater detail below.

The toothbrush motion tracking system 1 is configured to gather data regarding the brushing patterns and brushing sequences of users. The expression 'brushing pattern' is intended to encompass the pattern of motion of the brush over the various teeth surfaces and the duration / speed of that motion. The expression 'brushing sequence' is intended to encompass the sequence of such patterns making up one or more brushing periods or events. Such brushing patterns and brushing sequences, which may include duration of time spent in areas of the mouth, are typically highly individualised, i.e. different users have significantly different brushing patterns and brushing sequences which could be indicative of a particular user. However, given that an objective of providing feedback to a user on toothbrushing technique is to try to normalise users' brushing behaviour to a more optimised and effective brushing pattern, the brushing pattern and brushing sequence of each user will, hopefully, change over time according to the feedback given by the toothbrush motion tracking system. Therefore, the brushing patterns and brushing sequences ('brushing behaviour') observed by the toothbrush motion sensing would not necessarily be understood to be a reliable source of data for identifying an individual user among a cohort of possible users.

However, the inventors have found that certain characteristic toothbrush motions (referred to herein as 'signature motions') that are relatively independent of overall brushing patterns and brushing sequences, are highly characteristic of individual users and can be used to identify a specific user from among a cohort of candidate users. Each user holds a toothbrush slightly differently, e.g. a linear scrub may be along the brush main axis for one user while another user may tilt the brush such that there is also a component along the bristle axis. Furthermore, these signature motions have been found to be identifiable within only a short toothbrush motion sampling period relative to the duration of an overall brushing pattern and brushing sequence. This means that the signature motions can be detected in an early portion of a toothbrushing activity and serve as a user identification or user 'log-in' function such that the toothbrushing activity can then be correctly allocated to a specific user. The inventors have discovered that these user-specific signature motions can be sampled and successfully detected within 10-25 seconds of brushing activity rather than monitoring an entire brushing session and are generally independent of overall learned changes in toothbrushing behaviours that may be expected from the use of toothbrushing feedback. Thus, the 'signature motions' are relatively unaffected by substantive changes in brushing behaviour including whether a user performs a quick toothbrushing session or a more extended, thorough toothbrushing session.

Such user-specific 'signature motions' may be considered as user-specific or individual brushing dynamics, and may be ascribed to biomechanical attributes of the individual users such as arm, hand and wrist geometry, relative positioning of joint articulation pivot positions, limb, hand and finger angles when effecting tooth brushing strokes at different angles within the mouth.

The signature motions comprise micromotions which are executed subconsciously and can be detected based on accelerations of the toothbrush along three orthogonal axes. In particular, these may be found in the faster toothbrush movements, rather than the slower toothbrush movements which may comprise position change or dwell times and are more susceptible to change during user re-training from the feedback. These signature motions are preferably measured by the motion sensor 2 fixed on or within the toothbrush 10, 11 or associated dongle 12. However, it will be understood that the motion data could also be captured by a motion sensor on the user (e.g. on the user's hand or wrist) or captured by an imaging motion sensor in which a video image of the user / toothbrush is analysed to deduce motion of the toothbrush.

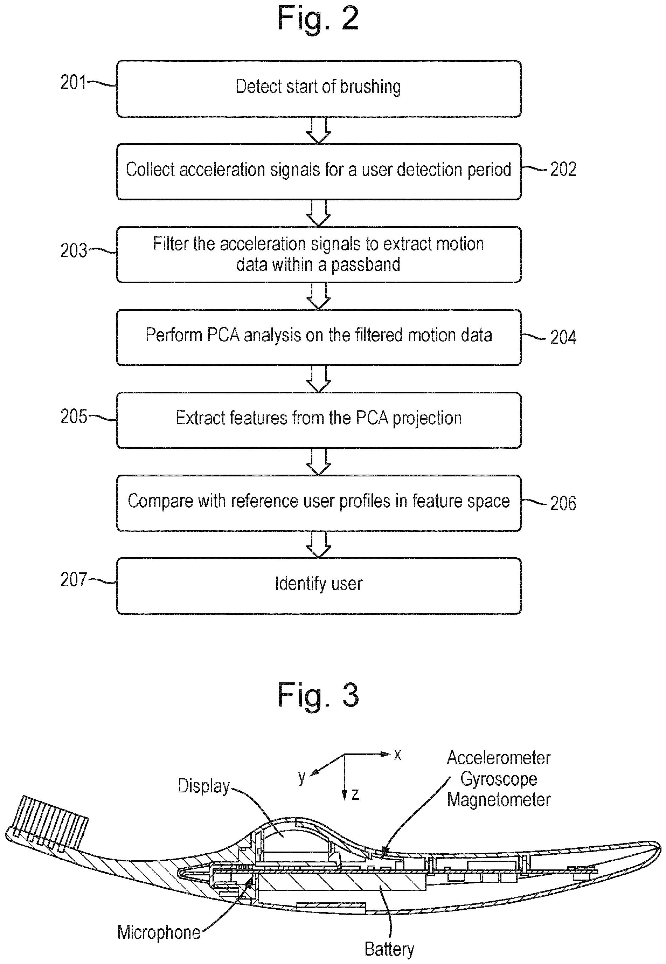

To extract the discriminative features of the motion signals that correspond to these signature motions, an example process is as follows, described with reference to figure 2.

Optionally, a start of a brushing session is detected (box 201). This could be achieved by any suitable method such as a user switching on or picking up the toothbrush, initiating a toothbrushing application on a feedback device such as data processing system 6, or acceleration signals being received / detected which are indicative of a tooth brushing session in progress (e.g. by motion analysis module 101). Acceleration signals on at least two axes, and preferably three axes, are collected (box 202), e.g. by user identification module 103, for a user detection period after the start of a brushing signal. Depending on the orientation of the motion sensors within the toothbrush, the axes may correspond to those of the toothbrush, e.g. in three-dimensional x-y-z space, the x-axis may be defined as the long axis of the toothbrush along the handle length (the toothbrush axes are illustrated in figure 3), y may be defined as the axis orthogonal to the toothbrush handle and orthogonal to the bristles' axes; and z may be defined as the axis parallel to the bristles of the brush.

The user detection period is preferably at least about 20 seconds, though the techniques described may be possible using signals from a user detection period of as little as 10 seconds and generally in the range 10 to 25 seconds although longer periods may also be used. In one illustrative example, the acceleration signals are collected as a series of acceleration values for each of the orthogonal axes of the motion sensors, e.g. if sampled at 20 Hz over, say 20 seconds, 400 acceleration data values for each of the three axes. The signals from the user detection period are high-pass filtered to remove slow variations such as those resulting from manoeuvring the brush from place to place in the mouth (box 203). More preferably, the acceleration signals are bandpass filtered with a passband filter operating between approximately 1 and 7 Hz passband, or between 2 and 6 Hz passband may yield even better results. If the toothbrush incorporates an electric motor, it will be more important to filter out higher frequencies such as those attributable to the electric motor. In the example given above, the sample data set after filtering may therefore still comprise 400 acceleration data values for each axis, assuming no down-sampling. These values may be considered as a cloud of acceleration values distributed in x-y-z space. Each toothbrushing event (e.g. the 10-25 second sampling period of the user detection period) thereby generates such a cloud of points. Each cloud of points may be considered to be one sample relating to each user toothbrushing event.

Multiple such user toothbrushing events may be recorded, to generate multiple such samples each comprising a cloud of data points. The multiple samples may correspond to one or more users.

Principal Component Analysis (PCA) is then performed (box 204, e.g. by the user identification module 103) on the three-dimensional x-y-z space, e.g. in which the x-axis may be defined as the long axis of the toothbrush along the handle length (the toothbrush axes are illustrated in figure 3), y may be defined as the axis orthogonal to the toothbrush handle and orthogonal to the bristles' axes; and z may be defined as the axis parallel to the bristles of the brush. This PCA projects the motion data onto an ordered set of principal axes in such a way as to maximize the variance across the PCA principal axes, while maintaining the condition that the total variance remains the same and the PCA axes are mutually orthogonal. In some instances, it is found that the main principal axis may closely coincide with the toothbrush x-axis, e.g. where the users perform a linear scrub along the x-axis (handle axis) or may include some component along the z-axis as a user tilts the brush slightly. Where up-down scrubs dominate, a significant proportion of motion may be along the y axis. Thus, in most instances, the PCA first axis may correspond to a combination of the linear motions, and PCA second axis may correspond to a combination of rotatory type motions. The principal component analysis is independent of the toothbrush motion sensor 2, 2a, 2b axis orientation / layout and will determine the optimum projection or rotation-transformation independent of the sensor orientation and establish the principal axes according to the users' behaviours. For an electric toothbrush, the principal components may be different, e.g. where a user implements brushing motion such as circles over the tooth surfaces.

Features from the PCA projection are then extracted; e.g., the variation associated with the main axes (box 205). These features can then be used to discriminate between the various users. In one aspect, the PCA finds a coordinate system (x', y', z') where the motion trajectory is independent of individual ways of holding the brush, e.g., a linear scrub may be mapped onto the x' axis (with substantially no components in the y', z' direction); similarly an elliptic (distorted circle) brushing motion may be mapped onto the x'-y' plane, with x' aligned with the longer axis of the ellipse. In the PCA, the first principal component (PC1) is aligned with a highest-variance motion component and the second principal component (PC2) is aligned with a second highest-variance component etc. The PCA can thereby perform a 'personalized' mapping for each user separately.

The mapping and resulting motion components along the x', y', z' axes vary between users and we can use this feature to identify individual users. In a general aspect, the co-ordinate system x', y', z' optimised for each individual user may be determined and a mapping between the toothbrush / sensor axes (x, y, z) and the principal component axes (x', y', z') is established for each user sample. In one aspect, it is possible to use mapping itself (i.e. the rotation matrix consisting of principal vectors) which reflects the individual way of holding the brush to differentiate between users. However, in a preferred arrangement, features extracted from the actual motion components in the x', y', z' frame such as the motion variances along the x', y', z' directions are used. In particular, motion variances along the x', y', z' axes may preferably be used to distinguish between users.

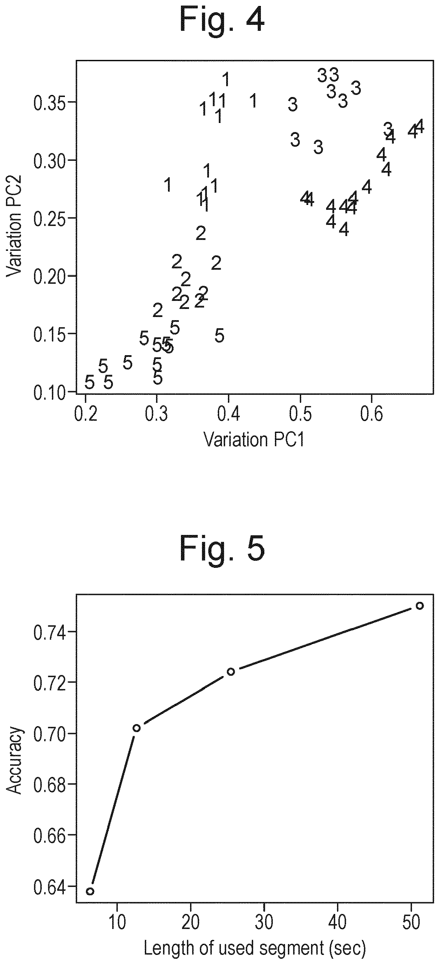

As can be seen in figure 4, the multiple data samples from five users labelled 1-5 is distributed in feature space showing clear discrimination between users, using the variation associated with the leading two components, PC1 (horizontal axis) and PC2 (vertical axis). For a three-dimensional data set, a third axis (not shown) would also be present. Each data point in the feature space shown in figure 4 may comprise one user-sample as defined above, e.g. the variance data from one cloud of data points from a sample corresponding to acceleration values derived from a user detection period of the first 25 seconds of a tooth brushing session (e.g. there are 12 sessions shown for user 5). The points in the feature space of figure 4 may each represent a measure of the statistical variation of the data for that sample (in the preferred case the variance) in the directions of each of the orthogonal PCA axes for that sample. A user employing predominantly linear scrub may have substantially all variance in the x' direction (user 5 in the plot appears to be an example), while a user employing principally circular / elliptic motion will have variance in x' and y' directions (e.g. user 1 in the plot).

An advantage of the PCA technique is that the method is more robust with respect to how a user holds the brush, since PCA finds the main brush action axes independently of how the user holds the brush. When specifically applied to higher frequency content (e.g. >1 Hz) as proposed above, the technique is able to distinguish the user-specific signature motions from slow or static brush orientation changes due to a) changes of brush orientation to reach different mouth regions (these generate a slowly changing bias in the accelerometer data which is filtered out), and b) random variations of the way the user holds the brush (these lead to random orientation of main brush action axes with respect to the sensor axes).

As can readily be seen in the plot of figure 4, individual users may readily be identified / discriminated from one another using this reference data in feature space. The reference data set may be stored as a reference user profile data set 105 in database 104. Any subsequent toothbrushing activity by one of those users can readily be compared (box 206) with the reference user profiles 105 in feature space, and assigned to a particular user in the reference data set. This can be achieved using a suitable analytical technique to compare the position of a new sample within feature space with the existing user sample clusters in feature space.

Any suitable multivariate model applied to the feature space to discriminate users may be used; e.g., k-nearest neighbour models or Linear Discriminant Analysis or Mahalanobis classifier. It will be understood that the analytical technique may determine that it is statistically unlikely that the data from a new toothbrushing activity actually corresponds to any of the users in the reference user profiles 105. In this case, the system may be configured to force a user identity check or to identify the data as belonging to a new user.

Thus, in a general aspect, the example data processing system 6 is configured to: obtain data indicative of toothbrush motion relative to at least two axes of the toothbrush (and preferably three axes); to filter the motion data to extract motion data over a predetermined frequency range, e.g. a frequency range greater than 1 Hz, or more preferably a frequency range comprising a passband of greater than 1 Hz and less than 7 Hz, or more preferably a frequency range comprising a passband of greater than 2 Hz and less than 6 Hz; to determine a motion component distribution of the filtered motion data; and to compare the motion component distribution with a plurality of user-specific motion component distributions in the user profiles 105 of database 104 to establish the data as indicative of one of a plurality of possible users. The motion data may comprise a magnitude of acceleration, velocity or displacement or combination thereof. Preferably acceleration is used as this may be easiest to obtain using micro-sensors, such as accelerometers. If obtaining motion data from video images, monitoring magnitude of displacement may be optimal, or velocity or acceleration data may be derived from the displacement measurements. If using displacement data, filtering may need to ensure removal of any slowly-changing baseline. Other types of motion sensor 2, 2a, 2b may be used such as gyroscopes or magnetometers. Combinations of such motion sensors may be used to provide the required motion data. The motion component distributions compared may each comprise a direction of the principal motion components of the respective filtered motion data set. Alternatively, or in addition, the motion component distributions compared may each comprise a magnitude of variance on each of two or more principal component axes for the respective filtered motion data set. Alternatively or in addition, the motion component distributions compared could be frequency distributions or spectra in the x', y', z' coordinate system, or correlations in the x', y', z' coordinate system, e.g. cross-correlations of sensor measurements between axes, <ax',ay'>, <ax',az'>, <ay',az'>, where ax' could be the x'-component of e.g. acceleration, or other motion component.

With reference to figure 5, it is found that the length of the brushing segment (user detection period) used for the user identification can be kept short, to be robust under variations of brushing times. As shown in figure 5, the duration of the brushing segment used for the user detection period can be as short as 20 seconds while still yielding average accuracies greater than 70%.

Once a user has been identified, the toothbrush motion relating to the brushing pattern and brushing sequence of that individual user may be stored in a user-specific dataset 106 in the database 104 for future use and for assisting in enabling the provision of feedback to the user by the feedback generator module 102 and display unit 110 or other feedback mechanism.

In order to provide the reference user profile data set as seen in figure 4, preferably a user registration process is implemented to provide labelled training data to initialize the model. For brushing data from adults and children, it has been found that three or four brushing sessions are sufficient to initialize the model, e.g. to provide the data set of reference users' profiles 105 in feature space as seen in figure 4. Preferably, a user may be required to actively identify themselves (e.g. log in) for one or more initial brushing sessions to capture sufficient data for the reference data set 105. The reference data set 105 may generally comprise a set of motion component distributions for a plurality of users, each motion component distribution labelled according to the respective user. The reference data sets could be acquired at multiple times within one or more brushing sessions.

In a first example of the toothbrush motion tracking system 1, a reference user profile dataset 105 can comprise each of the members of the household sharing the system. The system may initialize at first registration, and add users to the user profiles reference data set 105 as they each register. Alternatively, the system could start collecting data and detect unlabelled clusters in the user profiles datasets in feature space, and then whenever a user ID is made available (e.g. by user log in, or other user-identifying action) a corresponding cluster of that user could be labelled.

Thus, in a first example, each new user may be required to identify themselves for a first few samples in order to label the data points in feature space in the reference user profile dataset 105. After several labelled samples have been established for each user, the identity of the user can be detected automatically. Where users change their brush-holding styles over time, the reference user profile data set can be routinely or periodically updated with later motion data samples, or could even be systematically updated by aging out older data points in favour of newer ones, e.g. on a rolling average type-basis.

As described above the example of figure 4 illustrates each point in feature space as representing one user-sample corresponding to acceleration values derived from a single user detection period of the first 25 seconds of a toothbrush session, and identification of a user can be effected by an analytical technique that compares a position of a new sample with existing user sample clusters. However, in another arrangement, establishing each user reference data set could comprise combining all the points derived from several or many user detection periods in one aggregated point on the graph for each user, and identification of a user can be effected by determining which aggregated user reference point is closest to a new sample. In this scenario, the reference user profile data set can also be routinely or periodically updated with new reference data, including on a rolling average-type basis.

In certain circumstances, e.g. for a small family group of users, it may be possible to implement a fully automated user identification system. Each sample provided may be added to the reference user profile data set 105 and clusters of user data identified therein. Each new toothbrushing session may generate a sample in the early part of the toothbrushing session which will establish whether the data sample falls within one of the established clusters in feature space. If it does, data recordal and feedback may then be provided based on the user dataset for that cluster. If the data set does not evidently fall within one of the established clusters in feature space, the data set may be retained as an unallocated sample, which might be established as belonging to a new user when sufficient samples have been provided.

The data processing system 6 may be implemented in a number of ways, on a single platform or across multiple platforms. For example, at least part of the functionality of the data processing system 6 may be implemented by way of a smartphone application or other process executing on a mobile telecommunication device. The receiver 5 may comprise a short range wireless communication facility of the smartphone such as a Bluetooth, WiFi or NFC communication system. Some or all of the described functionality may be provided on the smartphone. Some of the functionality may be provided by a remote server using the long-range communication facilities of the smartphone such as the cellular telephone network and/or wireless internet connection. The smartphone app could require the user to connect and sign-in to the app for the first sessions to obtain the training data, i.e. the data to populate the reference user profile data 105. Other user profiles could be provided by way of other users in the household sharing the same smartphone or smartphone app, e.g. children using a parents smartphone. If the data processing system 6 is partially located at a remote server (e.g. in 'the cloud'), the identification / verification of the user may be by reference to a central database of a cohort of users also using the smartphone app, to verify that the toothbrushing data is consistent with the registered owner of the smartphone. The feedback generator module 102 of the data processing system 1 may be disposed at a remote server and feedback / toothbrushing data may be delivered back to the smartphone for display to the user.

The user identification module 103 may be configured to compute a confidence measure of association between a brushing session and an expected user, and label the session / store it in the user dataset 106 only if the confidence is sufficiently high. In this way, the amount of labelled data will increase over time, thus continuously improving the accuracy of the user identification.

The user identification system described above, using inherent 'signature motions' that are highly characteristic of individual users, has the distinct advantage that the assigning of data sets to individual users is not reliant on a separate authentication system such as a user 'log in' or an assumption of ownership of a particular brushing device, which are easily accidentally or intentionally subverted by use of another person's brushing device or dongle or smartphone app. With the user identification system as described herein, it is automatically assured that a user's brushing data is assigned to the correct user profile / user data set 106. If the data processing system 6 is provided by a user's smartphone, for example, the smartphone is enabled to reject any data not matching the user's profile.

Because the inherent signature motions used to identify or verify the user are also part of the motion sensing / capture of the toothbrushing session itself, a further advantage is that the data set used to identify the user can also form part of the brushing data set used for analysing toothbrushing technique and / or generating feedback to the user.

By disposing much of the functionality for user identification and motion analysis and feedback to a separate device such as data processing system 6, high cost parts of the toothbrush motion tracking system 1 can be separated from disposable items such as toothbrushes or brush heads.

However, other configurations of the toothbrush motion tracking system exemplified in figure 1 are possible. Some additional functionality can be provided on the toothbrush itself. For example, the toothbrush 10, 11 or dongle 12 may be provided with some or all of the data processing system 6 functionality. For example, user identification may be performed on the toothbrush. Feedback generation may be performed on the toothbrush.

Alternatively, the toothbrush 10, 11 or dongle 12 may be provided with a memory 4 which can be used to store toothbrushing data in real time for subsequent identification / verification of a specific user at a later time if the toothbrush is not connected to a suitable data processing system 6, such as the user's smartphone. In this way, datasets accrued on the toothbrush / dongle whilst the toothbrush / dongle is 'offline' may be subsequently uploaded, ascribed / allocated to a particular user and stored for future use and feedback. The upload process may occur automatically when the toothbrush detects the presence of the data processing system 6, e.g. user's smartphone. If the toothbrush is a multi-user toothbrush (e.g. a brush body / motor unit with interchangeable brush heads), the memory 4 may store data from multiple brushing sessions for different users; these may be subsequently uploaded to the data processing 6 and the identity of the user established and data sets stored after the brushing sessions have been completed.

As mentioned above, although the examples described above use one or more motion sensors integrated into or attached to a toothbrush or user, motion of the toothbrush during use by a user may be obtained from video images of the user during a toothbrushing activity. Suitable visual reference markings can be disposed onto a toothbrush or dongle to provide the imaging system with a precise indication of the position and angular presentation of the toothbrush relative to a video capture device and / or relative to a user's head position. Such reference markings can then be tracked and the precise disposition of the toothbrush in time and space tracked.

The motion tracking system described above has been illustrated using principal component analysis on two- or three-axis acceleration data, but the PCA could be performed on a higher number of dimensions, e.g. by including change of position or displacement data, or velocity data on two or three axes, in addition to the acceleration data on two or three axes, to assist in achieving well defined clustering that is indicative of individual users.

The motion tracking system described above has been illustrated using principal component analysis to determine motion component distributions of the filtered motion data of an unknown user, and thereby to compare the motion component distribution of that user with the motion component distributions of a plurality of users to determine which of the users corresponds to the unknown user data. PCA may be particularly advantageous where the data points from plural users are unlabelled, i.e. the identity of the user originating each cloud of data points is initially unknown. If the reference user profile data set represents a bounded set of users, i.e. a new sample never comes from a new user, then other techniques for comparing motion component distributions may be used, such as linear discriminant analysis or use of support vector machines to define the axes of the reference user profile data set 105.

## Claims

1. A computer program, distributable by electronic data transmission, comprising computer program code means adapted, when said program is loaded onto a computer, to make the computer execute a method of identifying a toothbrush user from among a plurality of different toothbrush users comprising:
- obtaining data indicative of toothbrush motion relative to at least two axes of the toothbrush;
- filtering (203) the motion data to extract motion data over a predetermined frequency range, wherein the predetermined frequency range comprises frequencies above 1 Hz;
- determining a motion component distribution of the filtered motion data using principal component analysis, in which determining a motion component distribution comprises performing said principal component analysis (204) to project the motion data onto a set of principal axes so as to maximise variance across the principal axes, and using features of the motion components in the reference frame of the principal axes to discriminate the user-specific motion from other ones of said users; and
- comparing (206) the motion component distribution with a plurality of user-specific motion component distributions to establish the data as indicative of one of said plurality of users.

2. The computer program of claim 1 further including, based on said comparing, selecting a one of said plurality of users as the indicated user and storing data or providing feedback based on the selected user.

3. The computer program of claim 2 in which the predetermined frequency range comprises a passband of between 1 and 7 Hz or between 2 Hz and 6 Hz.

4. The computer program of claim 1 in which the at least two axes include a longitudinal axis of the toothbrush.

5. The computer program of claim 1 further including using motion data relative to at least three axes of the toothbrush.

6. The computer program of claim 1 in which determining a motion component distribution comprises performing said principal component analysis to project the motion data onto a set of principal axes so as to maximise variance across the principal axes, and using a mapping or rotation matrix from the axes of the toothbrush motion data to the principal axes to discriminate the user-specific motion from other ones of said users.

7. The computer program of claim 1 in which the features of the motion components used comprise a measure of motion variances along the principal axes.

8. A toothbrush motion tracking system (1) comprising a data processor (6) configured to:
obtain data indicative of toothbrush motion relative to at least two axes of the toothbrush; filter (203) the motion data to extract motion data over a predetermined frequency range,
wherein the predetermined frequency range comprises frequencies above 1 Hz;
determine a motion component distribution of the filtered motion data using principal component analysis, in which determining a motion component distribution comprises performing said principal component analysis (204) to project the motion data onto a set of principal axes so as to maximise variance across the principal axes, and using features of the motion components in the reference frame of the principal axes to discriminate the user-specific motion from other ones of said users; and
compare (206 ) the motion component distribution with a plurality of user-specific motion component distributions to establish the data as indicative of one of said plurality of users.

9. The toothbrush motion tracking system of claim 8 further comprising a receiver configured to wirelessly receive the data indicative of toothbrush motion from a motion sensor.

10. The toothbrush motion tracking system of claim 8 further including a motion sensor module configured for removable attachment to a toothbrush, the motion sensor module comprising a motion sensor configured to sense movement of a toothbrush to which it is attached and a wireless transmitter configured for transmission of the sensed motion data to a remote device.

11. The toothbrush motion tracking system of claim 8 in which the data processor is disposed in or on a toothbrush.

12. The toothbrush motion tracking system of claim 8 in which the data processor is at least partially disposed within a mobile telecommunication device.

## Patentansprüche

1. Computerprogramm, das durch elektronische Datenübertragung verteilt werden kann und das Computerprogrammcodemittel umfasst, die so ausgelegt sind, dass dann, wenn das Programm auf einen Computer geladen wird, der Computer ein Verfahren zum Identifizieren eines Zahnbürstenbenutzers aus mehreren unterschiedlichen Zahnbürstenbenutzern ausführen kann, wobei das Verfahren die folgenden Schritte umfasst:
- Erhalten von Daten, die eine Zahnbürstenbewegung relativ zu wenigstens zwei Achsen der Zahnbürste anzeigen;
- Filtern (203) der Bewegungsdaten, um Bewegungsdaten über einen zuvor festgelegten Frequenzbereich zu extrahieren, wobei der zuvor festgelegte Frequenzbereich Frequenzen über 1 Hz umfasst,
- Ermitteln einer Bewegungskomponentenverteilung der gefilterten Bewegungsdaten unter Verwendung einer Hauptkomponentenanalyse, wobei das Ermitteln einer Bewegungskomponentenverteilung das Ausführen der Hauptkomponentenanalyse (204), um die Bewegungsdaten auf einen Satz von Hauptachsen zu projizieren, um die Varianz über die Hauptachsen zu maximieren, und das Verwenden von Merkmalen der Bewegungskomponenten im Referenzrahmen der Hauptachsen umfasst, um die benutzerspezifische Bewegung von anderen der Benutzer zu unterscheiden; und
- Vergleichen (206) der Bewegungskomponentenverteilung mit mehreren benutzerspezifischen Bewegungskomponentenverteilungen, um nachzuweisen, dass die Daten einen der mehreren Benutzer anzeigen.

2. Computerprogramm nach Anspruch 1, das ferner auf der Basis des Vergleichs das Auswählen eines von mehreren Benutzern als den angezeigten Benutzer und das Speichern von Daten oder das Bereitstellen eines Feedbacks auf der Basis des ausgewählten Benutzers umfasst.

3. Computerprogramm nach Anspruch 2, wobei der zuvor festgelegte Frequenzbereich ein Durchlassbereich zwischen 1 und 7 Hz oder zwischen 2 Hz und 6 Hz umfasst.

4. Computerprogramm nach Anspruch 1, wobei die wenigstens zwei Achsen eine Längsachse der Zahnbürste umfassen.

5. Computerprogramm nach Anspruch 1, das ferner das Verwenden von Bewegungsdaten relativ zu wenigstens drei Achsen der Zahnbürste umfasst.

6. Computerprogramm nach Anspruch 1, wobei das Ermitteln einer Bewegungskomponentenverteilung das Ausführen der Hauptkomponentenanalyse, um die Bewegungsdaten auf einen Satz von Hauptachsen zu projizieren, um die Varianz über die Hauptachsen zu maximieren, und das Verwenden einer Abbildungs- oder Rotationsmatrix von den Achsen der Zahnbürstenbewegungsdaten auf die Hauptachsen umfasst, um die benutzerspezifische Bewegung von anderen der Benutzer zu unterscheiden.

7. Computerprogramm nach Anspruch 1, wobei die Merkmale der verwendeten Bewegungskomponenten eine Maßzahl von Bewegungsvarianzen längs der Hauptachsen umfassen.

8. Zahnbürstenbewegung-Nachverfolgungssystem (1), das einen Datenprozessor (6) umfasst, der konfiguriert ist zum:
Erhalten von Daten, die eine Zahnbürstenbewegung relativ zu wenigstens zwei Achsen der Zahnbürste anzeigen,
Filtern (203) der Bewegungsdaten, um Bewegungsdaten über einen zuvor festgelegten Frequenzbereich zu extrahieren, wobei der zuvor festgelegte Frequenzbereich Frequenzen über 1 Hz umfasst,
Ermitteln einer Bewegungskomponentenverteilung der gefilterten Bewegungsdaten unter Verwendung einer Hauptkomponentenanalyse, wobei das Ermitteln einer Bewegungskomponentenverteilung das Ausführen der Hauptkomponentenanalyse (204), um die Bewegungsdaten auf einen Satz von Hauptachsen zu projizieren, um die Varianz über die Hauptachsen zu maximieren, und das Verwenden von Merkmalen der Bewegungskomponenten im Referenzrahmen der Hauptachsen umfasst, um die benutzerspezifische Bewegung von anderen der Benutzer zu unterscheiden; und
Vergleichen (206) der Bewegungskomponentenverteilung mit mehreren benutzerspezifischen Bewegungskomponentenverteilungen, um nachzuweisen, dass die Daten einen der mehreren Benutzer anzeigen.

9. Zahnbürstenbewegung-Nachverfolgungssystem nach Anspruch 8, das ferner einen Empfänger umfasst, der konfiguriert ist, die Daten, die eine Zahnbürstenbewegung anzeigen, drahtlos von einem Bewegungssensor zu empfangen.

10. Zahnbürstenbewegung-Nachverfolgungssystem nach Anspruch 8, das ferner ein Bewegungssensormodul umfasst, das für eine lösbare Befestigung an einer Zahnbürste konfiguriert ist, wobei das Bewegungssensormodul einen Bewegungssensor, der konfiguriert ist, eine Bewegung einer Zahnbürste, an der er befestigt ist, zu erfassen, und einen Drahtlossender, der für eine Übertragung der erfassten Bewegungsdaten an eine Remote-Vorrichtung konfiguriert ist, umfasst.

11. Zahnbürstenbewegung-Nachverfolgungssystem nach Anspruch 8, wobei der Datenprozessor in oder an einer Zahnbürste angeordnet ist.

12. Zahnbürstenbewegung-Nachverfolgungssystem nach Anspruch 8, wobei der Datenprozessor wenigstens zum Teil in einer mobilen Telekommunikationsvorrichtung angeordnet ist.

## Revendications

1. Programme informatique, distribuable par le biais d'une transmission électronique de données, comprenant un moyen de code de programme informatique apte à, lorsque ledit programme est chargé sur un ordinateur, amener l'ordinateur à exécuter un procédé d'identification d'un utilisateur de brosse à dents parmi une pluralité d'utilisateurs de brosse à dents différents, le procédé comprenant les étapes ci-dessous consistant à :
- obtenir des données indicatives d'un mouvement de brosse à dents par rapport à au moins deux axes de la brosse à dents ;
- filtrer (203) les données de mouvement pour extraire des données de mouvement sur une plage de fréquences prédéterminée, dans laquelle la plage de fréquences prédéterminée comprend des fréquences supérieures à 1 Hz ;
- déterminer une distribution de composantes de mouvement des données de mouvement filtrées, en faisant appel à une analyse en composantes principales, dans laquelle l'étape de détermination d'une distribution de composantes de mouvement comprend l'étape consistant à mettre en oeuvre ladite analyse en composantes principales (204) en vue de projeter les données de mouvement sur un ensemble d'axes principaux de manière à maximiser une variance à travers les axes principaux, et à utiliser des caractéristiques des composantes de mouvement dans le cadre de référence des axes principaux en vue de distinguer le mouvement spécifique de l'utilisateur de celui d'autres utilisateurs parmi lesdits utilisateurs ; et
- comparer (206) la distribution de composantes de mouvement à une pluralité de distributions de composantes de mouvement spécifiques à l'utilisateur en vue d'établir que les données sont indicatives d'un utilisateur de ladite pluralité d'utilisateurs.

2. Programme informatique selon la revendication 1, incluant en outre, sur la base de ladite étape de comparaison, l'étape consistant à sélectionner un utilisateur de ladite pluralité d'utilisateurs, en tant que l'utilisateur indiqué, et l'étape consistant à stocker des données ou à fournir un retour d'information sur la base de l'utilisateur sélectionné.

3. Programme informatique selon la revendication 2, dans lequel la plage de fréquences prédéterminée comprend une bande passante comprise entre 1 et 7 Hz ou entre 2 Hz et 6 Hz.

4. Programme informatique selon la revendication 1, dans lequel lesdits au moins deux axes comprennent un axe longitudinal de la brosse à dents.

5. Programme informatique selon la revendication 1, incluant en outre l'étape consistant à utiliser des données de mouvement par rapport à au moins trois axes de la brosse à dents.

6. Programme informatique selon la revendication 1, dans lequel l'étape consistant à déterminer une distribution de composantes de mouvement comprend l'étape consistant à mettre en oeuvre ladite analyse en composantes principales en vue de projeter les données de mouvement sur un ensemble d'axes principaux, de manière à maximiser une variance à travers les axes principaux, et à utiliser une matrice de mise en correspondance ou de rotation, des axes des données de mouvement de brosse à dents aux axes principaux, en vue de distinguer le mouvement spécifique de l'utilisateur de celui d'autres utilisateurs parmi lesdits utilisateurs.

7. Programme informatique selon la revendication 1, dans lequel les caractéristiques des composantes de mouvement utilisées comprennent une mesure de variances de mouvement le long des axes principaux.

8. Système de suivi de mouvement de brosse à dents (1) comprenant un processeur de données (6) configuré de manière à :
obtenir des données indicatives d'un mouvement de brosse à dents par rapport à au moins deux axes de la brosse à dents ;
filtrer (203) les données de mouvement pour extraire des données de mouvement sur une plage de fréquences prédéterminée, dans laquelle la plage de fréquences prédéterminée comprend des fréquences supérieures à 1 Hz ;
déterminer une distribution de composantes de mouvement des données de mouvement filtrées, en faisant appel à une analyse en composantes principales, dans laquelle l'étape de détermination d'une distribution de composantes de mouvement comprend l'étape consistant à mettre en oeuvre ladite analyse en composantes principales (204) en vue de projeter les données de mouvement sur un ensemble d'axes principaux de manière à maximiser une variance à travers les axes principaux, et à utiliser des caractéristiques des composantes de mouvement dans le cadre de référence des axes principaux en vue de distinguer le mouvement spécifique de l'utilisateur de celui d'autres utilisateurs parmi lesdits utilisateurs ; et
comparer (206) la distribution de composantes de mouvement à une pluralité de distributions de composantes de mouvement spécifiques à l'utilisateur en vue d'établir que les données sont indicatives d'un utilisateur de ladite pluralité d'utilisateurs.

9. Système de suivi de mouvement de brosse à dents selon la revendication 8, comprenant en outre un récepteur configuré de manière à recevoir, par voie hertzienne, les données indicatives du mouvement de brosse à dents, en provenance d'un capteur de mouvement.

10. Système de suivi de mouvement de brosse à dents selon la revendication 8, incluant en outre un module de capteur de mouvement configuré pour un attachement amovible à une brosse à dents, le module de capteur de mouvement comprenant un capteur de mouvement configuré de manière à détecter un mouvement d'une brosse à dents à laquelle il est attaché, et un émetteur sans fil configuré pour une transmission des données de mouvement détectées à un dispositif distant.

11. Système de suivi de mouvement de brosse à dents selon la revendication 8, dans lequel le processeur de données est disposé dans ou sur une brosse à dents.

12. Système de suivi de mouvement de brosse à dents selon la revendication 8, dans lequel le processeur de données est au moins partiellement disposé dans un dispositif de télécommunication mobile.
